# EUROPEAN PATENT APPLICATION

(11) **EP 4 492 514 A1**
(43) Date of publication of application: **15.01.2025**
(21) Application number: 23184411.9
(22) Date of filing: 10.07.2023
(51) Int. Cl.: H01M 10/04, H01M 50/249, H01M 50/55, H01M 50/553, H01M 50/103, H01M 50/209, B05B 12/20, B05B 13/02

(54) **BATTERY CELL FOR A TRACTION BATTERY OF A VEHICLE, CARRIER FOR SUPPORTING A BATTERY CELL DURING A MANUFACTURING PROCESS, SYSTEM FOR PERFORMING A MANUFACTURING PROCESS ON A BATTERY CELL, AND METHOD FOR MANUFACTURING A BATTERY**

(71) Applicant: Volvo Car Corporation, 405 31 Göteborg (SE)
(72) Inventor: NASSIF, Charbel, 40531 Göteborg (SE); SINGH, Aakash Narender, 40531 Göteborg (SE); SCHNEIDER, Christian, 40531 Göteborg (SE); GAO, Jerry, 40531 Göteborg (SE)
(74) Representative: Maiwald GmbH

(57) **Abstract**

The disclosure relates to a battery cell (12) for a traction battery of a vehicle. The battery cell (12) comprises a cell body (16) and two electric terminals (18, 20) provided on a first side (22) of the cell body (16). A positioning feature configured for positioning the battery cell (12) on a carrier (14) is arranged on at least one of the two electric terminals (18, 20). Moreover, a carrier (14) for supporting a battery cell (12) during a manufacturing process is shown. The carrier (14) comprises a support surface (38, 40) configured for contacting the first side (22) of the cell body (16) or a top side (24, 26) of an electric terminal (18, 20) of the battery cell (12) and a positioning counter-feature configured for positioning the battery cell (12) on the carrier (14). Additionally, a system (10) for performing a manufacturing process on a battery cell (12) is disclosed. The system (10) comprises such a carrier (14) and such a battery cell (12). Furthermore, a method for manufacturing a battery cell (12) for a traction battery of a vehicle is presented.

## Description

### TECHNICAL FIELD

The present disclosure relates to a battery cell for a traction battery of a vehicle. The battery cell comprises a cell body and two electric terminals provided on a first side of the cell body.

The present disclosure also is directed to a carrier for supporting a battery cell during a manufacturing process.

Moreover, the present disclosure relates to a system for performing a manufacturing process on a battery cell.

Furthermore, the present disclosure is directed to a method for manufacturing a battery cell for a traction battery of a vehicle.

### BACKGROUND ART

An outside of known battery cells for traction batteries of vehicles is often coated with electrically insulating material. The purpose of such a coating is to electrically separate the battery cells from one another and from structural parts of a battery pack in which the battery cells are used. In doing so, undesired short-circuits and the formation of undesired electric arcs are avoided.

In order to apply such a coating to a battery cell, the battery cell is usually supported on a carrier. The coating material may be applied on the battery cells by spraying.

### SUMMARY

It is an objective of the present disclosure to further enhance the quality of such coatings. At the same time, an efficiency of the coating process shall be increased.

### SE:TOP

The problem is at least partially solved or alleviated by the subject matter of the independent claims of the present disclosure, wherein further examples are incorporated in the dependent claims.

According to a first aspect, there is provided a battery cell for a traction battery of a vehicle. The battery cell comprises a cell body and two electric terminals provided on a first side of the cell body. A positioning feature configured for positioning the battery cell on a carrier is arranged on at least one of the two electric terminals. In this context, the positioning feature is a geometric feature of the at least one of the two electric terminals. Additionally or alternatively, the positioning feature is a geometric feature of a part separate from the two electric terminals and attached to the at least one of the two electric terminals. The positioning feature is configured to position the battery cell on the carrier. This means that the positioning feature comprises an abutment surface or an abutment feature which is configured to abut at a counter-surface or a counter-feature on the carrier. Thus, using the positioning feature, the battery cell may be positioned on the carrier in a simple and precise manner. The positioning feature may be configured for translatory and/or rotatory positioning on the carrier. In this context, the positioning feature may be configured to fully define a position of the battery cell on the carrier. This means that the positioning feature is configured to define a position of the battery cell on the carrier along three axes being arranged pairwise perpendicular to one another. Additionally, the positioning feature may be configured to define a rotatory position of the battery cell on the carrier around three axes being arranged pairwise perpendicular to one another. It is noted that the positioning feature always distinguishes the electric terminal equipped therewith from an electric terminal not comprising a positioning feature. This means that the positioning feature may be chosen independent from the electric features, e. g. electric connection surfaces of the electric terminal. Consequently, the same or a similar positioning feature may be used for electric terminals of different kinds, e.g. different geometries. Since the carrier needs to be adapted to the positioning feature of the battery cell, this has the effect that the same carrier can be used for battery cells having the same or a similar positioning feature, but electric terminals of different kinds. Altogether, the positioning feature may be used to fully define a position of the battery cell on the carrier in a three-dimensional space. As has been mentioned above, the positioning feature offers a simple, reliable and precise way to position the battery cell with respect to the carrier. The precise position of the battery cell on the carrier has the additional effect that a manufacturing process applied on the battery cell while the battery cell is supported on the carrier, may be performed with high precision. This is for example the case for a manufacturing process comprising the application of an electrically insulated coating on the battery cell, e.g. by spraying.

In an example, the battery cell may be a prismatic battery cell, i.e. a battery cell having a block-shape.

In the present disclosure, the electric terminal as such, i.e. without the positioning feature, may have a cylindrical shape.

In an example, each of the two electric terminals comprises a top side facing away from the cell body and at least one lateral side extending between the top side and the cell body. The positioning feature is arranged on at least one of the lateral sides. Consequently, the positioning feature does not enlarge the outer dimensions of the battery cell. In other words, the battery cell having such a positioning feature does not need more space during manufacturing or during use. At the same time, the positioning feature is well accessible, thereby facilitating positioning of the battery cell on the carrier.

According to an example, the positioning feature arranged on one of the two electric terminals is oriented away from the respective other one of the two electric terminals. Alternatively, the positioning feature arranged on one of the two electric terminals is oriented towards the respective other one of the two electric terminals. In both cases, the positioning feature is oriented along a longitudinal direction of the battery cell defined by a straight line connecting the respective centers of the two electric terminals. Consequently, the positioning feature is provided in a space-saving manner. At the same time, the positioning feature is well-accessible for positioning the battery cell on the carrier.

In an example, the positioning feature comprises a protrusion. This means that the positioning feature comprises a material element sticking out from the associated electric terminal. The protrusion is for example pin-shaped. A cross-section of the pin may be circular or rectangular. A protrusion forming a positioning feature is a comparatively simple element. Consequently, the positioning feature may be provided in a cost-efficient manner. At the same time, also due to the fact that a protrusion is a comparatively simple element, using a protrusion, the battery cell may be positioned in a simple and reliable manner.

In another example, the positioning feature comprises a recess. This means that the positioning feature comprises a local void. The void can be provided on the electric terminal or on a part separate from the electric terminal but attached to the electric terminal. The recess is for example cylindrical. A cross-section of recess is for example circular or rectangular. A recess forming a positioning feature is a comparatively simple element. Consequently, the positioning feature may be provided in a cost-efficient manner. At the same time, also due to the fact that a recess is a comparatively simple element, using a recess, the battery cell may be positioned in a simple and reliable manner.

In an example, the positioning feature is formed on a positioning part mounted on the at least one of the two electric terminals. This means that the positioning feature is provided on a part separate from the two electric terminals. In this example, a positioning feature may also be provided for battery cells which originally were not equipped with such a positioning feature. In other words, this makes it possible to retrofit a positioning feature to a battery cell. Moreover, using a positioning part has the advantage that the positioning part may have the functionality of an adapter part. Using such a positioning part or adapter part, a specific positioning feature may be used in connection with electric terminals and battery cells of different kind. Consequently, for all the battery cells of these different kinds, a single type of carrier may be used during production. This enhances the production efficiency.

In an example, the positioning part comprises a sleeve portion fully or partially surrounding the at least one of the two electric terminals. The positioning feature is arranged on the sleeve portion. Thus, using the sleeve portion, the positioning part may be easily and reliably connected to the associated electric terminal. In other words, the sleeve portion allows to reliably mount the positioning feature on the at least one of the two electric terminals.

In an example, the sleeve portion and the positioning feature are formed integrally. Thus, no assembly operations are necessary for forming the positioning part. This renders the positioning part and the production thereof simple.

According to a further example, the positioning feature is made from an electrically insulating material. In case the positioning feature is provided on a positioning part, the positioning part may be made from an electrically insulating material. In both cases, the positioning feature and/or the positioning part further enhance electric insulation of the battery cells with respect to the carrier during production.

In an example, a positioning feature is arranged on both of the two electric terminals. This allows to precisely and reliably position the battery cell on a carrier. This is especially true for rotationally positioning the battery cell.

According to a second aspect, there is provided a carrier for supporting a battery cell during a manufacturing process. The carrier comprises a support surface configured for contacting a first side of a cell body of the battery cell or a top side of an electric terminal of the battery cell. Two electric terminals are provided on the first side. Moreover, the carrier comprises a positioning counter-feature configured for positioning the battery cell on the carrier. It is noted that the positioning counter-feature of the carrier is just called a counter-feature in order to facilitate the explanation of the positioning feature of the battery cell and the positioning feature of the carrier. Of course, also the positioning counter-feature is a positioning feature. More precisely, the positioning counter-feature is a geometric feature of the carrier. The positioning counter-feature is configured to position the battery cell on the carrier. This means that the positioning counter-feature comprises an abutment surface or an abutment feature which is configured to abut against a surface or a feature of the battery cell. Thus, using the positioning counter-feature, the battery cell may be positioned on the carrier in a simple and precise manner. The positioning counter-feature may be configured for translatory and/or rotatory positioning on the carrier. In this context, the positioning counter-feature may be configured to fully define a position of the battery cell on the carrier. This means that the positioning counter-feature is configured to define a position of the battery cell on the carrier along three axes being arranged pairwise perpendicular to one another. Additionally, the positioning counter-feature may be configured to define a rotatory position of the battery cell on the carrier around three axes being arranged pairwise perpendicular to one another. Altogether, the positioning counter-feature may be used to fully define a position of the battery cell on the carrier in a three-dimensional space. As has been mentioned above, the positioning counter-feature offers a simple, reliable and precise way to position the battery cells with respect to the carrier. The precise position of the battery cell on the carrier has the additional effect that a manufacturing process applied on the battery cell while the battery cell is supported on the carrier, may be performed with high precision. This is for example the case for a manufacturing process comprising the application of an electrically insulated coating on the battery cell, e.g. by spraying.

According to an example, the carrier according to the present disclosure is configured to support a battery cell according to the present disclosure.

In an example, one or more of an area, a first dimension or a second dimension of a top side of the carrier comprising the support surface is smaller than one or more of a respective area, a respective first dimension or a respective second dimension of the first side of the battery cell. A first dimension of the battery cell may correspond to a longitudinal dimension of the battery cell which is defined by a straight line connecting respective centers of the electric terminals of the battery cell. A second dimension of the first side of the battery cell may be oriented perpendicularly to the first dimension and in parallel to the first side. The first dimension of the top side may be oriented in parallel to the first dimension of the battery cell if the battery cell is supported on the carrier. A second dimension of the top side may be oriented in parallel to the second dimension of the battery cell if the battery cell is supported on the carrier. This means that the top side of the carrier is smaller than the first side of the battery cell, at least in respect of one of a first dimension, a second dimension and an area. According to an example, the top side of the carrier is smaller than the first side of the battery cell with respect to all of the first dimension, the second dimension and the area. In simplified words, the top side of the carrier does not fully cover the first side of the battery cell if the battery cell is supported on the carrier such that the first side or a top side of one of the two electric terminals contacts the support surface. This has the effect that a manufacturing process may be applied to the remaining portions of the first side of the battery cell, i.e. the portions of the first side of the battery cell which are not covered by the top side of the carrier. In an example, the manufacturing process is a coating process. This means that a coating of e.g. electrically insulating material may be applied to the portions of the first side which are not covered by the top side of the carrier. This remarkably facilitates the manufacturing process, since it is not necessary to withdraw the battery cell from the carrier or to change an orientation of the battery cell with respect to the carrier for applying the manufacturing process on the first side of the battery cell.

In an example, the positioning counter-feature comprises a recess or a protrusion. In case the positioning counter-feature comprises a protrusion, the positioning counter-feature comprises a material element sticking out from the remaining portions of the carrier. The protrusion is for example pin-shaped. A cross-section of the pin may be circular or rectangular. A protrusion forming a positioning feature is a comparatively simple element. Consequently, such a positioning counter-feature may be provided in a cost-efficient manner. At the same time, also due to the fact that a protrusion is a comparatively simple element, using a protrusion, the battery cell may be positioned in a simple and reliable manner. In case the positioning counter-feature comprises a recess, the positioning feature comprises a local void. The recess is for example cylindrical. A cross-section of recess is for example circular or rectangular. A recess forming a positioning feature is a comparatively simple element. Consequently, the positioning counter-feature may be provided in a cost-efficient manner. At the same time, also due to the fact that a recess is a comparatively simple element, using a recess, the battery cell may be positioned in a simple and reliable manner.

In an example, the carrier comprises two positioning counter-features each associated with one of the two electric terminals of the battery cell. This allows to precisely and reliably position the battery cell on the carrier. This is especially true for rotationally positioning the battery cell.

According to a third aspect, there is provided a system for performing a manufacturing process on a battery cell. The system comprises a carrier according to the present disclosure and a battery cell according to the present disclosure. The first side of the battery cell or a top side of an electric terminal of the battery cell contacts the support surface of the carrier and the positioning feature of the battery cell engages the positioning counter-feature of the carrier. Thus, the positioning feature and the positioning counter-feature are configured to position the battery cell on the carrier, thereby allowing simple and precise positioning of the battery cell on the carrier. The precise position of the battery cell on the carrier has the additional effect that a manufacturing process applied on the battery cell while the battery cell is supported on the carrier, may be performed with high precision. This is for example the case for a manufacturing process comprising the application of an electrically insulated coating on the battery cell, e.g. by spraying.

According to a fourth aspect, there is provided a method for manufacturing a battery cell for a traction battery of a vehicle. The method comprises
- providing a battery cell comprising a cell body and two electric terminals provided on a first side of the cell body, wherein a positioning feature is arranged on at least one of the two electric terminals,
- providing a carrier comprising a support surface and a positioning counter-feature,
- arranging the first side of the cell body or a top side of an electric terminal of the battery cell on the support surface of the carrier, and
- engaging the positioning feature of the battery cell and the positioning counter-feature of the carrier.
Thus, the battery cell is positioned on the carrier in a simple and precise manner. This has the effect that a manufacturing process applied on the battery cell while the battery cell is supported on the carrier, may be performed with high precision. This is for example the case for a manufacturing process comprising the application of an electrically insulated coating on the battery cell, e.g. by spraying.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an system according to the present disclosure comprising a battery cell according to the present disclosure and a carrier according to the present disclosure in a lateral view along direction I in Figure 2,
- Figure 2: shows the system of Figure 1 in a lateral view along direction II in Figure 1,
- Figure 3: shows the system of Figures 1 and 2 in a sectional view along plane III-III in Figure 2,
- Figure 4: shows a system according to another example of the present disclosure comprising a battery cell according to another example of the present disclosure and a carrier according to another example of the present disclosure in a view corresponding to the view of Figure 3,
- Figure 5: shows a system according to still another example of the present disclosure comprising a battery cell according to still another example of the present disclosure and a carrier according to still another example of the present disclosure in a view corresponding to the view of Figures 3 and 4,
- Figure 6: illustrates three variants of battery cells according to the present disclosure each using a similar positioning feature, and
- Figure 7: illustrates a method for manufacturing a battery cell according to the present disclosure.

### DETAILED DESCRIPTION

The Figures are merely schematic representations and serve only to illustrate examples of the disclosure. Identical or equivalent elements are in principle provided with the same reference signs.

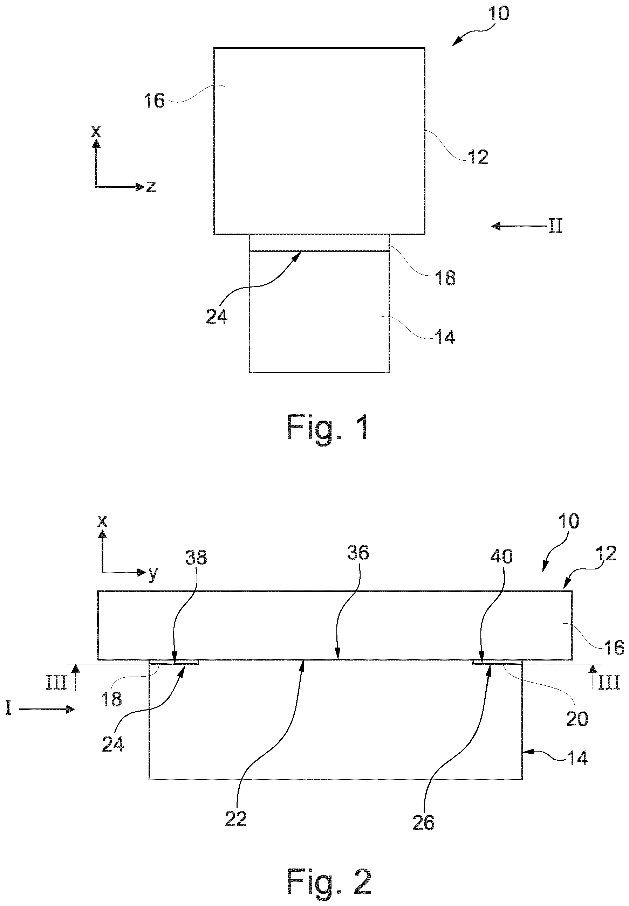

Figures 1 to 3 show a system 10 for performing a manufacturing process on a battery cell 12.

The system 10 comprises a battery cell 12 and a carrier 14.

The battery cell 12 is a battery cell 12 for a traction battery of a vehicle.

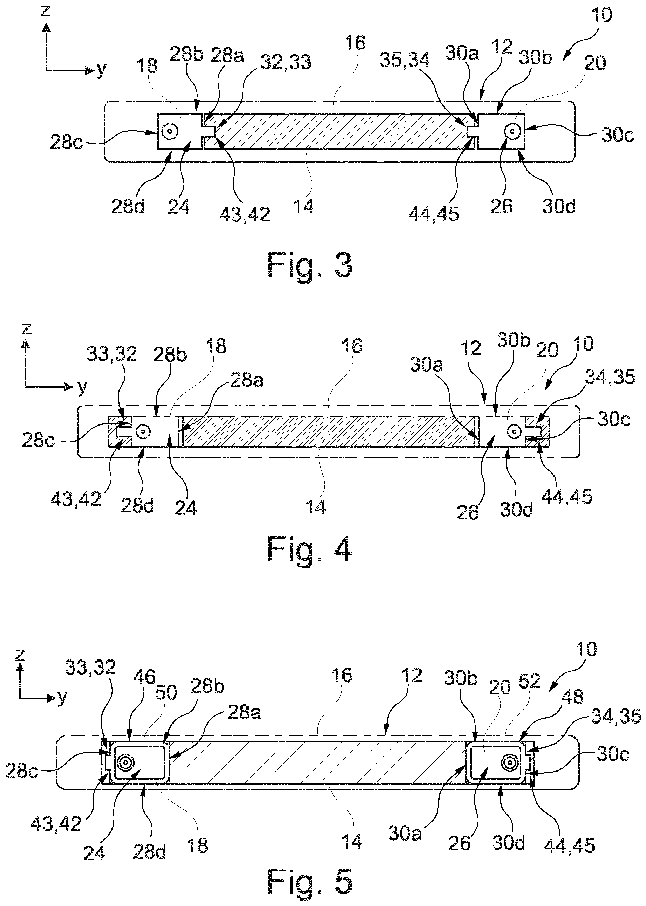

The battery cell 12 comprises a cell body 16 and two electric terminals 18, 20 (see especially Figure 3) arranged on a first side 22 of the cell body 16.

In the present example, the electric terminals 18, 20 are substantially block-shaped. In other words, the electric terminals 18, 20 have the form of a straight cylinder with a rectangular base surface.

Each of the electric terminals 18, 20 comprises a top side 24, 26 delimiting the respective electric terminal 18, 20 on a side opposite the cell body 16. In other words, the top sides 24, 26 face away from the cell body 16.

Furthermore, each of the electric terminals 18, 20 is delimited by a total of four lateral sides 28a, 28b, 28c, 28d, 30a, 30b, 30c, 30d extending between the respective top side 24, 26 and the cell body 16.

Moreover, a positioning feature 32, 34 is provided on each of the electric terminals 18, 20.

In the present example, the positioning features 32, 34 are each formed as a pin-shaped protrusion 33, 35.

Moreover, the positioning features are both arranged on a lateral side 28a, 30a of the respective electric terminal 18, 20 such that the positioning feature 32 is oriented towards the positioning feature 34 and vice versa.

In other words, the positioning feature 32 arranged on the electric terminal 18 is oriented towards the electric terminal 20 and the positioning feature 34.

The positioning feature 34 arranged on electric terminal 20 is oriented towards the electric terminal 18 and the positioning feature 32.

Both positioning features 32, 34 are configured for positioning the battery cell 12 on the carrier 14 as will be explained further below.

The carrier 14 is configured to support the battery cell 12 during a manufacturing process.

In the present example, the carrier 14 is essentially block-shaped.

The carrier 14 comprises a top side 36 which is oriented towards the battery cell 12 if the battery cell 12 is supported on the carrier 14.

On the top side 36 of the carrier 14, two support surfaces 38, 40 are provided.

The support surfaces 38, 40 are arranged such that the top side 24 of electric terminal 18 contacts support surface 38 and the top side 26 of electric terminal 20 contacts support surface 40 if the battery cell 12 is supported on the carrier 14.

In the present example, the support surfaces 38, 40 are recessed with respect to the remaining portions of the top side 36 of the carrier 14.

This means that each of the support surfaces 38, 40 is configured to contact a top side 24, 26 of an electric terminal 18, 20 of the battery cell 12.

Moreover, the carrier 14 comprises two positioning counter-features 42, 44.

The positioning counter-features are configured for positioning the battery cell 12 on the carrier 14 as will be explained further below.

Each of the positioning counter-features 42, 44 is associated with one of the electric terminals 18, 20 of the battery cell 12.

In the example shown in the Figures, each of the positioning counter-features 42, 44 comprises a recess 43, 45, more precisely a groove. Each of the grooves is laterally open on one side. Moreover, each of the grooves extends from an associated support surface 38, 40 of the carrier 14.

More precisely, the groove forming the counter feature 42 extends towards the support surface 40 and the counter-feature 44.

The groove forming the counter feature 44 extends towards the support surface 38 and the counter-feature 42.

In the present example, each of the recesses 43, 45 or grooves is formed such that it can receive one of the positioning features 32, 34 of the battery cell 12. In other words, each of the grooves is formed such that one of the pin-shaped protrusions 33, 35 can be received in the groove.

Thus, if the battery cell 12 is supported on the carrier 14, the top side 24 of the electric terminal 18 contacts the support surface 38. Additionally, the top side 26 of the electric terminal 20 contacts the support surface 40.

Consequently, the battery cell 12 and the carrier 14 are in a well-defined relative position along a direction perpendicular on the top sides 24, 26 of the electric terminals. This direction is referred to as an X-direction in the Figures.

It is noted that supporting the battery cell 12 along the X-direction via the top sides 24, 26 of the electric terminals 18, 20 is just an example. In another example, the battery cell 12 is supported along the X-direction via the portion of the first side 22 extending between the electric terminals 18, 20.

Moreover, the battery cell 12 and the carrier 14 are in a well-defined relative position along a direction being defined by a straight connection line between respective centers of the electric terminals 18, 20. This direction is referred to as a Y-direction in the Figures. The Y-direction is perpendicular to the X-direction.

The well-defined relative position along the Y-direction results from the fact that both the lateral side 28a of the electric terminal 18 and the lateral side 30a of the electric terminal 20 abut against a portion of the carrier 14 which results from the fact that the support surfaces 38, 40 are recessed. It is noted that in this example, a tip of the pin-shaped protrusions 33, 35 of the positioning features 32, 34 of the battery cell 12 do not abut against the carrier 14 along the Y-direction.

Moreover, the battery cell 12 and the carrier are in a well-defined relative position along a direction being oriented perpendicular to both the Y-direction and the X-direction. This direction will be referred to as the Z-direction. The Z-direction corresponds to a thickness-direction of the battery cell 12.

This well-defined position along the Z-direction is due to the fact that the pin-shaped protrusion 33 forming the positioning feature 32 is located in the recess 43 or groove forming the positioning counter-feature 42. Moreover, the pin-shaped protrusion 35 forming the positioning feature 34 is located in the recess 45 or groove forming the positioning counter-feature 44.

In other words, the positioning feature 32 engages the positioning counter-feature 42 and the positioning feature 34 engages the positioning counter-feature 44.

The position of the battery cell 12 on the carrier 14 is also well-defined with respect to a rotation around the X-direction, a rotation around the Y-direction and a rotation around the Z-direction.

This is due to the fact that both the electric terminal 18 and the electric terminal 20 have a well-defined translatory position.

Beyond that, as can be directly seen from Figure 3 and the combination of Figures 1 and 2, an area of the top side 36 of the carrier 14, a first dimension oriented along the Y-direction of the carrier 14 and a second dimension oriented along the Z-direction of the carrier 14 are smaller than the respective area of the first side 22 of the cell body 16, the respective dimension of the cell body 16 along the Y-direction and the respective dimension of the cell body 16 along the Z-direction.

In the example shown in Figures 1 to 3, a dimension of the carrier along the Y-direction corresponds to a distance between lateral surface 28c and 30c.

A dimension of the carrier 14 along the Z-direction corresponds to a dimension of the electric terminals 18, 20 along the Z-direction.

Thus, the carrier 14 is very small while still able to cover the top sides 24, 26 of the electric terminals 18, 20.

This is advantageous if the system 10 is used for performing a manufacturing process on the battery cell 12.

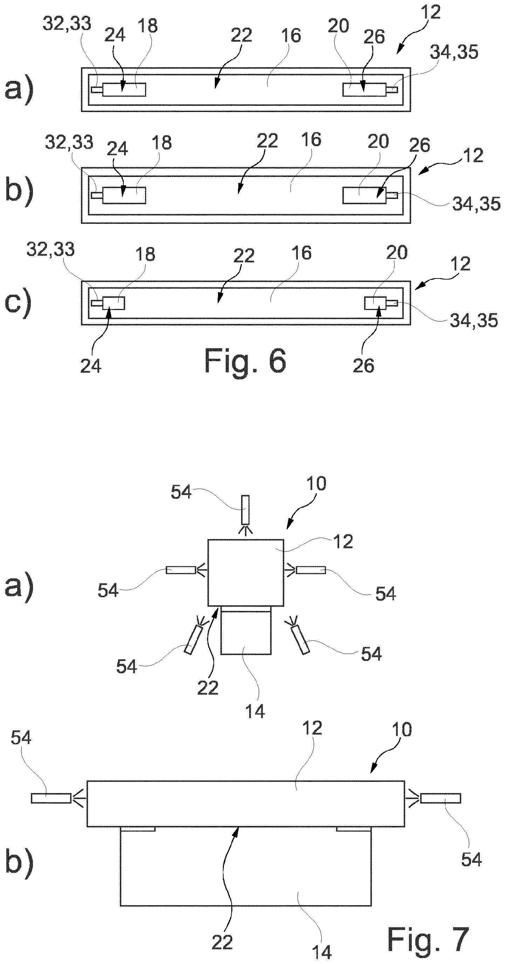

Thus, using the system 10, a method for manufacturing a battery cell 12 for a traction battery 12 of a vehicle may be executed. This is illustrated in Figure 7 wherein the view of Figure 7 a) corresponds to the view of Figure 1 and the view of Figure 7 b) corresponds to the view of Figure 2.

The method comprises a first step S1 which comprises providing the battery cell 12.

In a second step S2, the carrier 14 is provided.

In a third step S3, the top side 24 of the electric terminal 18 is brought in contact, i.e. supported, on the support surface 38 of the carrier 14.

Moreover, the top side 26 of the electric terminal 20 is brought in contact, i.e. supported, on the support surface 40 of the carrier 14.

At the same time, the positioning feature 32 is engaged with the positioning counter-feature 42. This means that the pin-shaped protrusion 33 is arranged in the recess 43.

Additionally, the positioning feature 34 is engaged with the positioning counter-feature 44. This means that the pin-shaped protrusion 35 is arranged in the recess 45.

In a subsequent fourth step S4, the manufacturing process is applied on the battery cell 12. In the present example, the manufacturing process is a coating process wherein an electrically insulating material is applied on the outer surface of the cell body 16. More precisely, the electrically insulating material is sprayed on the outer surface of the cell body 16.

To this end, seven nozzles 54 are used in the present example.

It has to be highlighted that due to the fact that the carrier 14 is small as has been explained above in more detail, electrically insulating material may as well be applied on the first side 22 of the cell body 16. In other words, electrically insulating coating is provided on all six sides of the block-shaped cell body 16.

Figure 4 shows a system 10 according to another example. The system 10 comprises a battery cell 12 according to another example and a carrier 14 according to another example.

In the following, only the differences with respect to the first example will be explained.

As far as the battery cell 12 is concerned, the positioning features 32, 34 are the same as in the example of Figures 1 to 3.

However, in contrast to the example of Figures 1 to 3, the positioning features 32, 34 are both arranged on a lateral side 28c, 30c of the respective electric terminal 18, 20 such that the positioning feature 32 is oriented away from the positioning feature 34 and vice versa.

In other words, the positioning feature 32 arranged on the electric terminal 18 is oriented away from the electric terminal 20 and the positioning feature 34.

The positioning feature 34 arranged on electric terminal 20 is oriented away from the electric terminal 18 and the positioning feature 32.

As far as the carrier 14 is concerned, the positioning counter-features 42, 44 as such are identical to the positioning counter-features 42, 44 of the example of Figures 1 to 3.

However, the grooves forming the positioning counter-features 42, 44 are now arranged on the respective other sides of the support surfaces 38, 40.

This implies that in the example of Figure 4, the carrier 14 is slightly longer along the Y-direction than the carrier 14 of the example according to Figures 1 to 3. This is due to the fact that the carrier 14 needs to be long enough such that the grooves forming the positioning counter-features 42, 44 can be formed.

Beyond that, reference is made to the above explanations in connection with the example of Figures 1 to 3.

Figure 5 shows a system 10 according to still another example. The system 10 comprises a battery cell 12 according to still another example and the carrier 14 according to still another example.

The example of Figure 5 can be considered a variation of the example of Figure 4.

Thus, in the following, only the differences with respect to the examples of Figures 1 to 3 and Figure 4 will be explained.

In the example of Figure 5, the positioning features 32, 34 are formed on a respective positioning part 46, 48 mounted on an associated electric terminal 18, 20.

Thus, besides the positioning feature 32, 34 each of the positioning parts 46, 48 comprises a sleeve portion 50, 52.

In the present example, the sleeve portion 48 fully surrounds the electric terminal 18. The sleeve portion 50 fully surrounds the electric terminal 20.

The sleeve portion 48 and the positioning feature 32 are formed integrally.

In the same manner, the sleeve portion 50 and the positioning feature 34 are formed integrally.

Altogether, in the example of Figure 5, the positioning features 32, 34 are provided on a respective positioning part 46, 48 separate from the electric terminals 18, 20.

This offers the possibility to retrofit such positioning features 32, 34 to battery cells 12.

Figure 6 shows a selection of three battery cells 12 according to further examples.

The battery cells 12 differ by the form of their electric terminals 18, 20.

All of the electric terminals 18, 20 have a rectangular cross-section.

However, in the example of Figure 6 a), the cross-section of the electric terminals 18, 20 is comparatively long along the Y direction and comparatively narrow along the Z direction.

In contrast thereto, in the example of Figure 6 b), the cross-section is wider along the Z direction while the size along the Y direction substantially remains the same.

In the example of Figure 6 c), the dimension of the cross-section of the electric terminals 18, 20 along the Z direction is substantially equal to the dimension of the electric terminals 18, 20 along the Z direction in the example of Figure 6 a). However, in the example of Figure 6 c), the cross-section is substantially shorter along the Y-direction.

While the form of the electric terminals 18, 20 is different in the examples of Figures 6a), 6 b) and 6 c), the positioning features 32, 34 as such are identical.

This offers the possibility to use the same carrier 14 in connection with any of the battery cells 12 shown in Figures 6 a), 6 b), 6 c). In other words, when for example applying a coating of electrically insulating material on each of the different battery cells 12 Figures 6 a), 6 b), 6 c), the same type of carrier may be used.

It is noted that in all of the above examples, the positioning features 32, 34 of the battery cell 12 each comprise a protrusion 33, 35, wherein the positioning counter-features 42, 44 of the carrier 14 comprise corresponding recesses 43, 45 which are sized to receive an associated one of the protrusions 33, 35 of the positioning features 32, 34.

This configuration may be geometrically inverted. This means that in other examples, the positioning features 32, 34 of the battery cell 12 may comprise a recess and the positioning counter-features 42, 44 of the carrier 14 may comprise a corresponding protrusion. Also in these examples, the recesses, now provided on the battery cell 12 are sized to receive an associated one of the protrusions now provided on the carrier 14. Also in these examples, the same effects and advantages apply that have been explained above in connection with the examples of Figures 1 to 7.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: system
- 12: battery
- 14: carrier
- 16: cell body
- 18: electric terminal
- 20: electric terminal
- 22: first side of the cell body
- 24: top side of an electric terminal
- 26: top side of an electric terminal
- 28a: lateral side of an electric terminal
- 28b: lateral side of an electric terminal
- 28c: lateral side of an electric terminal
- 28d: lateral side of an electric terminal
- 30a: lateral side of an electric terminal
- 30b: lateral side of an electric terminal
- 30c: lateral side of an electric terminal
- 30d: lateral side of an electric terminal
- 32: positioning feature
- 33: protrusion
- 34: positioning feature
- 35: protrusion
- 36: top side of the carrier
- 38: support surface of the carrier
- 40: support surface of the carrier
- 42: positioning counter-feature
- 43: recess
- 44: positioning counter-feature
- 45: recess
- 46: positioning part
- 48: positioning part
- 50: sleeve portion
- 52: sleeve portion
- 54: nozzle

## Claims

1. A battery cell (12) for a traction battery of a vehicle, comprising a cell body (16) and two electric terminals (18, 20) provided on a first side (22) of the cell body (16), wherein a positioning feature (32, 34) configured for positioning the battery cell (12) on a carrier (14) is arranged on at least one of the two electric terminals (18, 20).

2. The battery cell (12) of claim 1, wherein each of the two electric terminals (18, 20) comprises a top side (24, 26) facing away from the cell body (16) and at least one lateral side (28a, 28b, 28c, 28d, 30a, 30b, 30c, 30d) extending between the top side (24, 26) and the cell body (16) and wherein the positioning feature (32, 34) is arranged on at least one of the lateral sides (28a, 28b, 28c, 28d, 30a, 30b, 30c, 30d).

3. The battery cell (12) of claim 1 or 2, wherein the positioning feature (32, 34) arranged on one of the two electric terminals (18, 20) is oriented away from the respective other one of the two electric terminals (18, 20) or wherein the positioning feature (32, 34) arranged on one of the two electric terminals (18, 20) is oriented towards the respective other one of the two electric terminals (18, 20).

4. The battery cell (12) of any of the preceding claims, wherein the positioning feature (32, 34) comprises a protrusion (33, 35).

5. The battery cell (12) of any of the preceding claims, wherein the positioning feature (32, 34) comprises a recess.

6. The battery cell (12) of any of the preceding claims, wherein the positioning feature (32, 34) is formed on a positioning part (46, 48) mounted on the at least one of the two electric terminals (18, 20).

7. The battery cell (12) of claim 6, wherein the positioning part (46, 48) comprises a sleeve portion (50, 52) fully or partially surrounding the at least one of the two electric terminals (18, 20) and wherein the positioning feature (32, 34) is arranged on the sleeve portion (50, 52).

8. The battery cell (12) of claim 7, wherein the sleeve portion (50, 52) and the positioning feature (32, 34) are formed integrally.

9. The battery cell (12) of any of the preceding claims, wherein a positioning feature (32, 34) is arranged on both of the two electric terminals (18, 20).

10. A carrier (14) for supporting a battery cell (12) during a manufacturing process, the carrier (14) comprising at least one support surface (38, 40) configured for contacting a first side (22) of a cell body (16) of the battery cell (12) or a top side (24, 26) of an electric terminal (18, 20) of the battery cell (12), wherein two electric terminals (18, 20) are provided on the first side (22), and a positioning counter-feature (42, 44) configured for positioning the battery cell (12) on the carrier (14).

11. The carrier (14) of claim 10, wherein one or more of an area, a first dimension or a second dimension of a top side (36) of the carrier (14) comprising the support surface (38, 40) is smaller than one or more of a respective area, a respective first dimension or a respective second dimension of the first side (22) of the battery cell (12).

12. The carrier (14) of claim 10 or 11, wherein the positioning counter-feature (42, 44) comprises a recess (43, 45) or a protrusion.

13. The carrier (14) of any of claims 10 to 12, wherein the carrier (14) comprises two positioning counter-features (42, 44) each associated with one of the two electric terminals (18, 20) of the battery cell (12).

14. A system (10) for performing a manufacturing process on a battery cell (12), the system (10) comprising a carrier (14) according to any of claims 10 to 13 and a battery cell (12) according to any of claims 1 to 9, wherein the first side (22) of the cell body (16) or a top side (24, 26) of an electric terminal (18, 20) of the battery cell (12) contacts the support surface (38, 40) of the carrier (14) and the positioning feature (32, 34) of the battery cell (12) engages the positioning counter-feature (42, 44) of the carrier (14).

15. A method for manufacturing a battery cell (12) for a traction battery of a vehicle, the method comprising
- providing a battery cell (12) comprising a cell body (16) and two electric terminals (18, 20) provided on a first side (22) of the cell body (16), wherein a positioning feature (32, 34) is arranged on at least one of the two electric terminals (18, 20),
- providing a carrier (14) comprising a support surface (38, 40) and a positioning counter-feature (42, 44),
- arranging the first side (22) of the cell body (16) or a top side (24, 26) of an electric terminal (18, 20) of the battery cell (12) on the support surface (38, 40) of the carrier (14), and
- engaging the positioning feature (32, 34) of the battery cell (12) and the positioning counter-feature (42, 44) of the carrier (14).

## Amended claims

### Amended claims in accordance with Rule 137(2) EPC.

1. A battery cell (12) for a traction battery of a vehicle, comprising a cell body (16) and two electric terminals (18, 20) provided on a first side (22) of the cell body (16), wherein a positioning feature (32, 34) configured for positioning the battery cell (12) on a carrier (14) is arranged on at least one of the two electric terminals (18, 20),
wherein each of the two electric terminals (18, 20) comprises a top side (24, 26) facing away from the cell body (16) and at least one lateral side (28a, 28b, 28c, 28d, 30a, 30b, 30c, 30d) extending between the top side (24, 26) and the cell body (16) and wherein the positioning feature (32, 34) is arranged on at least one of the lateral sides (28a, 28b, 28c, 28d, 30a, 30b, 30c, 30d), and
wherein the positioning feature (32, 34) comprises a protrusion (33, 35).

2. The battery cell (12) of claim 1, wherein the positioning feature (32, 34) arranged on one of the two electric terminals (18, 20) is oriented away from the respective other one of the two electric terminals (18, 20) or wherein the positioning feature (32, 34) arranged on one of the two electric terminals (18, 20) is oriented towards the respective other one of the two electric terminals (18, 20).

3. The battery cell (12) of any of the preceding claims, wherein the positioning feature (32, 34) comprises a recess.

4. The battery cell (12) of any of the preceding claims, wherein the positioning feature (32, 34) is formed on a positioning part (46, 48) mounted on the at least one of the two electric terminals (18, 20).

5. The battery cell (12) of claim 4, wherein the positioning part (46, 48) comprises a sleeve portion (50, 52) fully or partially surrounding the at least one of the two electric terminals (18, 20) and wherein the positioning feature (32, 34) is arranged on the sleeve portion (50, 52).

6. The battery cell (12) of claim 5, wherein the sleeve portion (50, 52) and the positioning feature (32, 34) are formed integrally.

7. The battery cell (12) of any of the preceding claims, wherein a positioning feature (32, 34) is arranged on both of the two electric terminals (18, 20).

8. A carrier (14) for supporting a battery cell (12) according to any of claims 1 to 7 during a manufacturing process, the carrier (14) comprising at least one support surface (38, 40) configured for contacting a first side (22) of a cell body (16) of the battery cell (12) or a top side (24, 26) of an electric terminal (18, 20) of the battery cell (12), wherein two electric terminals (18, 20) are provided on the first side (22), and a positioning counter-feature (42, 44) configured for positioning the battery cell (12) on the carrier (14), wherein the positioning counter-feature (42, 44) is configured for engaging the positioning feature (32, 34) of the battery cell (12).

9. The carrier (14) of claim 8, wherein one or more of an area, a first dimension or a second dimension of a top side (36) of the carrier (14) comprising the support surface (38, 40) is smaller than one or more of a respective area, a respective first dimension or a respective second dimension of the first side (22) of the battery cell (12).

10. The carrier (14) of claim 8 or 9, wherein the positioning counter-feature (42, 44) comprises a recess (43, 45) or a protrusion.

11. The carrier (14) of any of claims 8 to 10, wherein the carrier (14) comprises two positioning counter-features (42, 44) each associated with one of the two electric terminals (18, 20) of the battery cell (12).

12. A system (10) for performing a manufacturing process on a battery cell (12), the system (10) comprising a carrier (14) according to any of claims 8 to 11 and a battery cell (12) according to any of claims 1 to 7, wherein the first side (22) of the cell body (16) or a top side (24, 26) of an electric terminal (18, 20) of the battery cell (12) contacts the support surface (38, 40) of the carrier (14) and the positioning feature (32, 34) of the battery cell (12) engages the positioning counter-feature (42, 44) of the carrier (14).

13. A method for manufacturing a battery cell (12) for a traction battery of a vehicle, the method comprising
- providing a battery cell (12) according to any of claims 1 to 7,
- providing a carrier (14) according to any of claims 8 to 11,
- arranging the first side (22) of the cell body (16) or a top side (24, 26) of an electric terminal (18, 20) of the battery cell (12) on the support surface (38, 40) of the carrier (14), and
- engaging the positioning feature (32, 34) of the battery cell (12) and the positioning counter-feature (42, 44) of the carrier (14).
